# EUROPÄISCHE PATENTSCHRIFT

(11) **EP 3 649 768 B1**
(45) Veröffentlichungstag und Bekanntmachung des Hinweises auf die Patenterteilung: **23.10.2024**
(21) Anmeldenummer: 18759862.8
(22) Anmeldetag: 09.08.2018
(51) Int. Cl.: H04L 9/40, H04L 9/32, G06F 21/44

(54) **VERFAHREN ZUM SICHEREN ERSETZEN EINES BEREITS IN EIN GERÄT EINGEBRACHTEN ERSTEN HERSTELLERZERTIFIKATS**
METHOD FOR THE SECURE REPLACEMENT OF A FIRST MANUFACTURER CERTIFICATE ALREADY INCORPORATED INTO A DEVICE
PROCÉDÉ DE REMPLACEMENT SÉCURISÉ D'UN PREMIER CERTIFICAT DE FABRICANT DÉJÀ INTRODUIT DANS UN APPAREIL

(30) Priorität: 17.08.2017 DE 102017214359
(43) Veröffentlichungstag der Anmeldung: 13.05.2020
(73) Patentinhaber: Siemens Mobility GmbH, 81739 München (DE)
(72) Erfinder: BROCKHAUS, Hendrik, 85579 Unterbiberg (DE); BUSSER, Jens-Uwe, 85579 Neubiberg (DE)
(74) Vertreter: Siemens Patent Attorneys
(86) Internationale Anmeldenummer: PCT/EP2018/071583
(87) Internationale Veröffentlichungsnummer: WO 2019/034509

(56) Entgegenhaltungen:
- DE-A1- 102011 081 804
- DE-A1- 102013 205 051
- US-A1- 2006 236 379

## Beschreibung

Die Erfindung betrifft ein Verfahren zum sicheren Ersetzen eines bereits in ein Gerät eingebrachten ersten Herstellerzertifikats durch ein zweites Herstellerzertifikat, ohne das Gerät zum Hersteller zurückbringen zu müssen. Des Weiteren betrifft die Erfindung ein System sowie ein entsprechendes Computerprogrammprodukt.

Eine Authentifizierung von Anwendern, Maschinen und Prozessen wird zunehmend zu einer der grundlegenden Anforderungen für den sicheren Betrieb von Systemen und Anlagen. Ein probates Mittel zur sicheren Durchführung dieser Authentifizierung ist die Verwendung von digitalen Zertifikaten, die immer weiter vordringt und auch bereits etablierte Prozesse basierend auf Passwörter ersetzt. Insbesondere in hochkritischen Systemen in den Bereichen Transport, Energieversorgung, Produktion und Medizintechnik werden digitale Zertifikate zunehmend eingesetzt.

Typische Einsatzszenarien für digitale Zertifikate, die insbesondere einen öffentlichen Schlüssel zur Authentisierung und zum Integritätsschutz und/oder zur Verschlüsselung beinhalten, sind beispielsweise
- Zertifikate, die beim Aufbau einer sicheren Kommunikationsverbindung, beispielsweise mit Hilfe des Transportschicht-Sicherungsprotokolls TLS, zu Webservern verwendet werden,
- Zertifikate für Personen, digitale Ausweise, Zutrittskontrolle oder E-Mail,
- operative Zertifikate für Geräte zur Kommunikation, zum Signieren von Protokollierungsdaten oder zum Entschlüsseln von Software oder Konfigurationsdaten, oder
- Herstellerzertifikate für Geräte zum Nachweis der Originalität und als Vertrauensanker zum Anfordern weiterer sicherheitsrelevanter Daten, das auch als Bootstrapping bezeichnet wird.

Die meisten dieser Zertifikate werden nur für einen eher kurzen Zeitraum, typischerweise ein bis drei Jahre, ausgestellt und bei Ablauf erneuert. Lediglich Herstellerzertifikate sollen für die gesamte Lebensdauer des zugehörigen Geräts gültig sein, die 30 Jahre oder auch länger betragen kann. Ein Ersetzen oder Aktualisieren dieser Herstellerzertifikate ist in der Regel nicht vorgesehen.

Wird nun eine Zertifizierungsstelle, die ein solches Herstellerzertifikat ausgestellt hat, kompromittiert, so kann von ihr ausgestellten Herstellerzertifikaten nicht mehr vertraut werden. Gelingt es einem Angreifer eine periphere PKI-Komponente, wie eine beispielsweiselokale Registrierungsstelle, auch als Registration Authority bezeichnet, zu manipulieren, so kann er über diese von der zentralen Zertifizierungsstelle, auch als Certification Authority bezeichnet, Zertifikate erstellen lassen. Teile der im Zertifikat enthaltenen Daten kann der Angreifer beeinflussen bzw. selbst festlegen, beispielsweise den öffentlichen Schlüssel oder Identifikationsmerkmale des Zertifikatsinhabers, andere Teile dagegen werden von der Zertifizierungsstelle gemäß des definierten Zertifikatsprofils bestimmt, beispielsweise Erstellungszeitpunkt, Gültigkeitsdauer, Seriennummer des Zertifikats und Verwendungszweck. Alle erstellten Zertifikate werden üblicherweise von der Zertifizierungsstelle in einer Datenbank protokolliert. Wird ein Missbrauch entdeckt, so ist es ausreichend, wenn die unberechtigt ausgestellten Zertifikate identifiziert und widerrufen werden. Dazu werden die Zertifikatsseriennummern der unberechtigt ausgestellten Zertifikate in eine Zertifikatswiderrufsliste und/oder in eine Datenbank für ein Zertifikatsstatusprotokoll, auch online certificate status protocol OCSP genannt, eingetragen. Berechtigt ausgestellte Zertifikate können weiter verwendet werden.

Falls es nicht möglich oder zu aufwändig ist, alle unberechtigt ausgestellten Zertifikate einzeln zu identifizieren, so können auch alle Zertifikate widerrufen werden, die von der manipulierten Registrierungsstelle während Zeitraums der Manipulation beantragt wurden.

Kann sich ein Angreifer den privaten Signaturschlüssel der Zertifizierungsstelle durch Kopieren oder Diebstahl verschaffen, so kann er damit Zertifikate mit beliebigen Inhalten erstellen, insbesondere auch rückdatierte Zertifikate mit einem Erstellungsdatum vor dem Zeitpunkt der Kompromittierung sowie mit beliebigen Zertifikatsseriennummern. Diese Zertifikate sind dann nicht in der Zertifikatsdatenbank der Zertifizierungsstelle enthalten. Da ihre Zertifikatsseriennummern nicht bekannt sind, können sie nicht widerrufen werden. Außerdem kann der Angreifer mit dem privaten Signaturschlüssel auch Zertifikatswiderrufslisten erstellen, in denen Zertifikatsseriennummern seiner gefälschten Zertifikate nicht enthalten sind. Im Falle einer solch schwerwiegenden Kompromittierung kann daher keinem von dieser Zertifizierungsstelle ausgestellten Zertifikat noch vertraut werden. Das Zertifikat der Zertifizierungsstelle muss von einer übergeordneten Zertifizierungsstelle widerrufen bzw. - wenn es sich um eine Wurzelzertifizierungsstelle (root CA) handelt - bei allen Anwendern ausgetauscht werden. Damit sind auch alle von der Zertifizierungsstelle ausgestellten Zertifikate widerrufen. Eine neue Zertifizierungsstelle muss aufgesetzt, und alle berechtigten Zertifikatsinhaber müssen mit neuen Zertifikaten versorgt werden.

Für operative Zertifikate zur Kommunikation, Signierung von Protokollierungsdaten etc. sind Verfahren zum Ausrollen und Aktualisieren üblicherweise verfügbar, da diese Zertifikate eher kurzlebig sind und daher in regelmäßigen Abständen erneuert werden müssen. Diese Verfahren können gegebenenfalls auch nach der Kompromittierung einer Zertifizierungsstelle zum Verteilen neuer operativer Zertifikate angewandt werden.

Für Herstellerzertifikate und zugehörige private Schlüssel, die üblicherweise bei der Fertigung eines Gerätes oder in einer anderen sicheren Umgebung des Herstellers in das Gerät eingebracht werden und als Imprinting bezeichnet wird, ist eine Aktualisierung üblicherweise nicht vorgesehen. Zum Ersetzen der Herstellerzertifikate müssten die Geräte zurück in die Fertigung oder eine andere sichere Umgebung beim Hersteller gebracht werden, was einen enormen Aufwand mit sich bringt.

Es ist somit die Aufgabe der vorliegenden Erfindung, Geräte und deren Herstellerzertifikate, die von einer kompromittierten Ausstellungsstelle ausgestellt wurden, zu identifizieren und einen sicheren Austausch beziehungsweise ein sicheres Ersetzen des Herstellerzertifikates, das bereits in ein Gerät eingebracht ist, mit geringem Aufwand, also ohne Ausbau des Gerätes aus seinem Einsatzort oder einem Zurückbringen des Gerätes zum Hersteller, zu ermöglichen,

Dokument DE102013205051 und US2006/236379 gelten als relevanter Stand der Technik.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum sicheren Ersetzen eines ersten, bereits in ein Gerät eingebrachten Herstellerzertifikats durch ein zweites Herstellerzertifikat, wobei mindestens ein das Gerät eindeutig kennzeichnender spezifischen Geräte-bezogener Parameter, der im ersten Herstellerzertifikat enthalten ist und das Gerät eindeutig identifiziert, aus einer vertrauenswürdigen Gerätedatenbank ermittelt wird, Erzeugen eines zweiten Herstellerzertifikates enthaltend mindestens den spezifischen Geräte-bezogenen Parameter des ersten Zertifikates und einen öffentlichen Schlüssel des Gerätes, sowie Ersetzen des ersten Herstellerzertifikates durch das zweite Zertifikat im Gerät.

Eine solche Gerätedatenbank ist häufig im Produktionssystem beim Hersteller verfügbar.

Auch eine Zertifizierungsstelle umfasst üblicherweise eine Zertifikatsdatenbank, in der alle Zertifikate, die von dieser

Zertifizierungsstelle ausgestellt wurden, mit allen in dem Zertifikat enthaltenen Parametern abgespeichert werden. Auch diese Zertifikatsdatenbank kann als Gerätedatenbank DB im Sinne der Erfindung verwendet werden, wenn sie noch vertrauenswürdig ist und nicht als kompromittiert gilt.

In Herstellerzertifikaten wird insbesondere als eindeutig kennzeichnender, spezifischer Parameter eines Geräts eine Seriennummer des Geräts eingesetzt.

Das Herstellerzertifikat bestätigt somit einem Gerät, von einem bestimmten Hersteller zu sein sowie eine bestimmte Geräteseriennummer und weitere im Zertifikat in den Parametern angegebenen Eigenschaften zu besitzen. Somit kann einem Gerät ein Zertifikat eindeutig zugeordnet werden und ein neues zweites Herstellerzertifikat mit den gleichen spezifischen Geräte-bezogenen Parametern erstellt werden. Je nach Bedarf kann das zweite Herstellerzertifikat im Wesentlichen die Parameter des ersten Zertifikates enthalten, beispielsweise lediglich von einer neuen Zertifizierungsstelle ausgestellt und somit von dieser Zertifizierungsstelle signiert werden.

In einer vorteilhaften Ausführungsform wird das zweite Herstellerzertifikat bei einem Wartungsvorgang, insbesondere bei einer Konfigurationsänderung des Gerätes, oder bei einem Aktualisieren eines operativen Zertifikats in das Gerät durch einen Techniker eingebracht oder vom Gerät selbst von einem Datenspeicher (Server, Netzlaufwerk, etc.) geladen und installiert werden.

Das zweite Herstellerzertifikat wird vom Hersteller veröffentlicht oder dem Besitzer des Geräts oder Dritten zur Verfügung gestellt. Hat das zweite Herstellerzertifikat eine zweite Zertifizierungsstelle ausgestellt, so wird mit dem zweiten Herstellerzertifikat auch eine neue Zertifikatskette übermittelt. Das zweite Herstellerzertifikat kann dann bei einem Wartungsvorgang oder bei einem Aktualisieren eines operativen Zertifikats in das Gerät durch einen Techniker eingebracht oder vom Gerät selbst von einem Datenspeicher, beispielsweise einem Server, Netzlaufwerk, etc., geladen und installiert werden. Falls das Gerät die Funktionalität zum Einbringen eines neuen Herstellerzertifikats nicht besitzt, so kann diese im Rahmen einer Firmware-Aktualisierung hinzugefügt werden.

Dies hat den Vorteil, dass zum Ersetzen des Herstellerzertifikats keine zusätzlichen neuen Prozesse notwendig sind und somit der finanzielle und personelle Aufwand für das Ersetzten des Zertifikats optimiert wird.

In einer vorteilhaften Ausführungsform wird mindestens ein Zertifikat-bezogender Parameter, insbesondere eine Zertifikatsseriennummer des zweiten Herstellerzertifikates oder eine Gültigkeitsdauer des zweiten Herstellerzertifikates unabhängig von den entsprechenden Parametern des ersten Zertifikates erzeugt.

Somit lässt sich beispielsweise die Gültigkeitsdauer eines Herstellerzertifikates verlängern, und insbesondere kann bei der Ausstellung des zweiten Zertifikates durch eine zweite Zertifizierungsstelle eine Zertifikatsseriennummer aus deren Nummernkreis für das zweite Herstellerzertifikat verwendet werden.

Erfindungsgemäß wird über die Gerätedatenbank ermittelt, für welche Geräte ein erstes Herstellerzertifikat von einer kompromittierten ersten Zertifizierungsstelle ausgestellt wurde und in den ermittelten Geräten das erste Herstellerzertifikat durch ein Herstellerzertifikat, das von der zweiten Zertifizierungsstelle erzeugt wird, ersetzt.

Dadurch können beispielsweise alle Geräte, deren Zertifikate erzeugt wurden vor einem Zeitpunkt, an dem die Kompromittierung stattgefunden hat, ermittelt werden und für diese Geräte zweite Herstellerzertifikate erzeugt werden.

In einer vorteilhaften Ausführungsform wird mindestens ein zusätzlicher Gerät-bezogender Parameter des ersten Zertifikates aus der Gerätedatenbank ermittelt und als Parameter in das zweite Herstellerzertifikat übernommen.

Dies ermöglicht es, geringfügig in den Parametern des ersten Zertifikates abweichende zweite Zertifikate auszustellen, beispielsweise um einen geänderten Herstellernamen einzutragen. Andererseits können auch weniger Geräte-bezogene Parameter in das zweite Herstellerzertifikat übernommen werden.

Des Weiteren ist es vorteilhaft, wenn ein öffentlicher Schlüssel des Geräts im ersten Herstellerzertifikat als öffentlicher Schlüssel in das zweite Herstellerzertifikat übernommen wird. In einem solchen Fall muss kein neues Schlüsselpaar für das Gerät erzeugt werden. Die Beziehung zwischen dem öffentlichen Schlüssel und den anderen Geräte-bezogenen Parametern des Zertifikates, wie beispielsweise die Seriennummer des Gerätes, bleibt erhalten.

In einer vorteilhaften Ausführungsform wird das zweite Herstellerzertifikat von einer zweiten Zertifizierungsstelle erzeugt und mit dem privaten Schlüssel der zweiten Zertifizierungsstelle signiert und mit einem Zertifikat der zweiten Zertifizierungsstelle an das Gerät übermittelt und das zweite Herstellerzertifikat im Gerät als neues Herstellerzertifikat übernommen, wenn das zweite Zertifikat der zweiten Zertifizierungsstelle durch ein im Gerät vorliegendes Root-Zertifikat als vertrauenswürdig bestätigt wird.

Somit kann bei Vorliegen eines Root-Zertifikates für das Zertifikat der zweiten Zertifizierungsstelle ohne weiteren Austausch von Root-Zertifikaten die Vertrauenswürdigkeit der zweiten Herstellerzertifikate sichergestellt werden.

In einer vorteilhaften Ausführungsform wird das zweite Herstellerzertifikat von der ersten Zertifizierungsstelle erzeugt und mit dem privaten Schlüssel der ersten Zertifizierungsstelle signiert und das zweite Herstellerzertifikat im Gerät als neues Herstellerzertifikat übernommen.

Dadurch ist ein Austausch eines ersten Zertifikates durch ein zweites Zertifikat, das von der gleichen, nämlich der ersten, Zertifizierungsstelle ausgestellt wird, möglich. Es können beispielsweise geänderte oder auch neue, Geräte-bezogene oder auch Zertifikats-bezogene Parameter dadurch eingeführt werden. Die Vertrauenswürdigkeit der ersten Zertifizierungsstelle ist dabei durch das Vorliegen eines Zertifikates der ersten Zertifizierungsstelle gegeben. Lediglich bei einem Widerruf eines solchen Zertifikates der ersten Zertifizierungsstelle wird ein solches zweites Zertifikat nicht vom Gerät akzeptiert.

In einer vorteilhaften Ausführungsform wird von der Zertifizierungsstelle für jedes Gerät ein neues, zweites asymmetrisches Schlüsselpaar erzeugt, in ein zweites Herstellerzertifikat der vom öffentlichen Schlüssel des ersten Herstellerzertifikates unterschiedliche zweite öffentlicher Schlüssel eingebracht und der zum zweiten öffentlichen Schlüssel gehörende zweite private Schlüssel kryptographisch mit dem ersten öffentlichen Schlüssel des ersten Herstellerzertifikates geschützt an das Gerät bereitgestellt.

Somit kann auch neues Schlüsselmaterial für das Gerät erzeugt und in die Geräte eingebracht werden. Ein privater Schlüssel bedarf eines zusätzlichen Schutzes, da dieser lediglich im Gerät bekannt sein sollte. Durch die Verschlüsselung des zweiten privaten Schlüssels mit dem ersten öffentlichen Schlüssel des Gerätes kann der zweite private Schlüssel vertraulich und damit sicher übertragen werden. Da das Gerät den ersten privaten Schlüssel bei der Herstellung erhalten hat, kann das Gerät den verschlüsselten zweiten privaten Schlüssel entschlüsseln und den ersten privaten Schlüssel ersetzen. Das Einbringen des zweiten privaten Schlüssels kann wie das Einbringen des zweiten Herstellerzertifikats durch einen Techniker im Rahmen der Wartung oder auch durch Laden von einem Speicher in einem Netzwerk erfolgen.

Ein zweiter Aspekt der Erfindung betrifft ein System mit einer auf einer Public Key Infrastruktur basierenden Sicherheitsfunktion umfassend mindestens ein Gerät, mindestens eine vertrauenswürdige Gerätedatenbank und mindestens eine Zertifizierungsstelle, die derart ausgebildet sind, das beschriebene Verfahren durchzuführen.

Ein weiterer Aspekt der vorliegenden Erfindung betrifft ein Computerprogrammprodukt, das direkt in einem Speicher eines digitalen Computers ladbar ist, umfassend Programmcodeteile, die dazu geeignet sind, die Schritte des Verfahrens durchzuführen.

Das Computerprogrammprodukt kann dabei in digitalen Computern oder Mikroprozessoren, die Bestandteil eines Gerätes, einer Gerätedatenbank oder einer Zertifizierungsstelle des erfindungsgemäßen Systems sind, gespeichert und ausgeführt werden.

Ausführungsbeispiele des erfindungsgemäßen Verfahrens sowie des erfindungsgemäßen Systems sind in den Zeichnungen beispielhaft dargestellt und werden anhand der nachfolgenden Beschreibung näher erläutert. Es zeigen:
- Figur 1: ein Ausführungsbeispiel eines erfindungsgemäßen Systems in schematischer Darstellung; und
- Figur 2: ein Ausführungsbeispiel eines erfindungsgemäßen Verfahrens als Ablaufdiagramm.

Einander entsprechende Teile sind in allen Figuren mit den gleichen Bezugszeichen versehen.

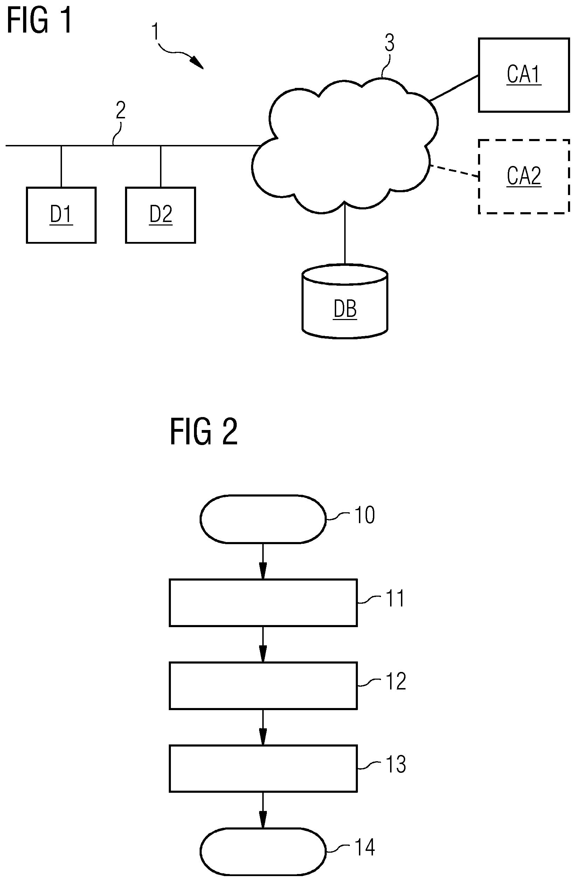

Figur 1 zeigt ein vereinfacht dargestelltes System 1 mit einem Anlagennetz 2, in dem Geräte D1, D2 wie beispielsweise Steuerungs- und Signalkomponenten eines Bahnsicherungsnetzes oder Feldgeräte und Steuerungseinrichtungen in einem Automatisierungsnetz miteinander verbunden sind und miteinander kommunizieren. Entsprechende Systeme werden auch im Bereich der Energieversorgung oder auch in der Medizintechnik verwendet.

Um die Integrität und Authentizität der Kommunikation zwischen den Geräten D1, D2 sowie die Originalität eines Gerätes D1, D2 überprüfen zu können, ist im System 1 eine sogenannte Public Key Infrastruktur eingerichtet. Dabei werden asymmetrische Kryptofunktionen basierend auf Schlüsselpaaren bestehend aus einem öffentlichen Schlüssel und einem dazugehörenden privaten Schlüssel zur Verschlüsselung von Nachrichten, zur Signierung von Daten, aber auch zum Nachweis der Originalität des Geräts D1, D2 verwendet.

Ein digitales Herstellerzertifikat wird beispielsweise bei der Herstellung des Geräts D1, D2 in das Gerät D1, D2 eingebracht, das heißt im Gerät D1, D2 gespeichert und ist ein digitaler Datensatz, der bestimmte Eigenschaften des Geräts D1, D2 bestätigt und dessen Authentizität und Integrität durch kryptografische Verfahren geprüft werden kann. Das digitale Zertifikat enthält insbesondere die zu seiner Prüfung erforderlichen Daten. Die Ausstellung des Herstellerzertifikats erfolgt beispielsweise durch eine Zertifizierungsstelle CA1, die auch als Certification Authority bezeichnet wird.

Ein Herstellerzertifikat enthält Informationen, im Weiteren auch als Parameter bezeichnet, insbesondere Zertifikat-bezogene Parameter und Geräte-bezogene Parameter. Als Zertifikat-bezogene Parameter werden im Weiteren angesehen:
- ein Name oder eine andere eindeutige Bezeichnung des Ausstellers des Zertifikates, insbesondere der ausstellenden Zertifizierungsstelle CA1, auch als "issuer" bezeichnet,
- eine eindeutige Zertifikatsseriennummer,
- Informationen zur Gültigkeitsdauer des Zertifikates.

Geräte-bezogene Parameter sind insbesondere:
- eine eindeutige Bezeichnung des Geräts, zu dem das Zertifikat Angaben macht, auch als "subject" bezeichnet, beispielsweise Geräteseriennummer, Gerätetyp und Herstellername,
- MAC-Adressen und andere Kommunikationsparameter,
- ein öffentlicher Schlüssel des Geräts, und
- weitere Informationen zum Gerät, wie Angaben zum zulässigen Anwendungs- und Geltungsbereich des öffentlichen Schlüssels.

Ein zum öffentlichen Schlüssel gehörender privater Schlüssel wird im Gerät möglichst sicher vertraulich gespeichert und sollte keiner anderen Komponente im System 1 bekannt sein.

Des Weiteren enthält das Herstellerzertifikat eine digitale Signatur der Zertifizierungsstelle CA1 über alle anderen Parameter. Die Zertifizierungsstelle CA1 erstellt die Signatur mittels eines privaten Schlüssels der Zertifizierungsstelle, der auch als Signaturschlüssel der Zertifizierungsstelle bezeichnet wird. Für die Prüfung dieser Signatur der Zertifizierungsstelle CA1 wird jedoch wiederum eine Zuordnung des öffentlichen Schlüssels der Zertifizierungsstelle CA1 zu seiner Identität, d. h. ein Zertifikat der Zertifizierungsstelle benötigt. Die Vertrauenswürdigkeit des Zertifikats der Zertifizierungsstelle wird wiederum von einer als vertrauenswürdig angenommenen Zertifizierungsstelle durch ein sogenanntes Root-Zertifikat bestätigt. Zwischen ausstellender Zertifizierungsstelle und der als vertrauenswürdig angenommenen Zertifizierungsstelle können weitere Zertifizierungsstellen das Zertifikat der jeweils vorherigen Zertifizierungsstelle bestätigen. Diese Hierarchie von Zertifikaten bildet eine Public-Key-Infrastruktur (PKI). Um die Vertrauenswürdigkeit des Herstellerzertifikats prüfen zu können, muss die prüfende Einheit die gesamte Zertifikatkette von dem Zertifikat der ausstellende Zertifizierungsstelle D1, D2 bis zum Root-Zertifikat vorliegen.

Jedes Geräte D1, D2 enthält ein für das Gerät spezifisches erstes Herstellerzertifikat, das von der ersten Zertifizierungsstelle CA1 ausgestellt wurde und beispielsweise bei der Herstellung in das Gerät D1, D2 eingebracht wurde und dort gespeichert ist. Üblicherweise führt der Hersteller eine Gerätedatenbank DB in der für alle hergestellten Geräte Geräte-bezogene Kenndaten wie beispielsweise eine Seriennummer des Gerätes, Seriennummern der im Gerät verbauten Komponenten, Information zu verbauter Firmware, MAC Adressen, und mindestens ein auch Kenndaten zu dem in das Gerät D1, D2 eingebrachten Herstellerzertifikats, wie beispielsweise Zertifikatseriennummer, Gültigkeitsdauer. Diese in der Gerätedatenbank DB gespeicherten Kenndaten entsprechen zumindest teilweise den im Zertifikat enthaltenen Geräte-bezogenen oder auch Zertifikat-bezogenen Parametern. Bevorzugt umfasst die Datenbank DB die Information zur ausstellenden Zertifizierungsstelle CA1 eines in ein Gerät eingebrachten Gerätezertifikats.

Wird nun die ausstellende erste Zertifizierungsstelle CA1 kompromittiert, so kann den von ihr ausgestellten ersten Zertifikaten nicht mehr vertraut werden. Die Maßnahmen, die nach Entdeckung einer Kompromittierung getroffen werden müssen, hängen von der Art der Kompromittierung ab. Konnte ein Angreifer die erste Zertifizierungsstelle CA1 dazu veranlassen, einzelne Zertifikate zu erstellen, ohne dass er dabei in den Besitz des privaten Schlüssels der ersten Zertifizierungsstelle, z.B. durch Kopie des Schlüssels, gelangen konnte, und sind alle unberechtigt erstellten Zertifikate bekannt, so ist es ausreichend, diese ersten Zertifikate zu widerrufen.

Besteht der Verdacht, dass ein Angreifer während eines bekannten Zeitraums unbefugt Zertifikate durch die erste Zertifizierungsstelle erstellen ließ, ohne dass diese Zertifikate genau bekannt sind, so ist es ausreichend, alle während dieses Zeitraums erzeugten ersten Zertifikate zu widerrufen. Dazu ist es aber notwendig, dass die Zertifikatsseriennummern dieser Zertifikate bekannt sind.

Für nicht selbstsignierte und operative Zertifikate , die zur Kommunikation des Gerätes mit anderen Geräten oder zum Signieren von Protokollierungsdaten verwendet werden, kann ein Zertifikatswiderruf durch die ausstellende Zertifizierungsstelle über eine standardisierte Zertifikatswiderrufsliste gemäß dem Internet Engineering Task Force IETF Standard RFC 5280 oder gemäß einem Online Certificate Status Protocol OCSP, siehe IETF RFC 6960 durchgeführt werden. Selbstsignierte Zertifikate müssen zum Widerruf aus dem Speicher für vertrauenswürdige Zertifikate entfernt werden.

Konnte ein Angreifer den privaten Schlüssel der Zertifizierungsstelle in Erfahrung bringen, so kann er damit zu jeder Zeit beliebige Zertifikate neu erzeugen. Er kann damit also auch rückdatierte Zertifikate erzeugen, deren im Zertifikat enthaltener Wert "validity - notBefore" in der Vergangenheit, d.h. vor dem Zeitpunkt der Kompromittierung liegt, und diese mit beliebigen Zertifikatsseriennummern versehen. Diese extern erstellten Zertifikate des Angreifers sind dann typischerweise nicht in der Datenbank der Zertifizierungsstelle enthalten.

Damit kann ein Dritter keinem der von dieser ersten Zertifizierungsstelle CA1 erzeugten Zertifikate mehr vertrauen. Das Zertifikat der Zertifizierungsstelle muss widerrufen und eine neue Zertifizierungsstellen-Instanz muss erstellt werden.

Anwender, insbesondere die Inhaber, der Zertifikate benötigen anschließend neue Zertifikate. Für beispielsweise operative Zertifikate ist dies über bereits etablierte Prozesse zum Ausrollen und Aktualisieren dieser Zertifikate, wenn auch mit Aufwand verbunden, möglich. Für Herstellerzertifikate besteht diese Möglichkeit allerdings nicht, da ein Aktualisieren dieser Zertifikate nicht vorgesehen ist. Zur Ersetzung der Herstellerzertifikate müssten die Geräte zurück in die Fertigung oder in eine andere sichere Umgebung beim Hersteller gebracht werden. Dies stellt einen enormen Aufwand dar und ist wahrscheinlich in vielen Fällen nicht realisierbar.

Zum Ersetzen von Herstellerzertifikaten ist in einem Herstellernetz 3 innerhalb des Systems 1 eine erste Zertifizierungsstelle CA1 oder eine zweite Zertifizierungsstelle CA2 angeordnet, die derart ausgebildet sind, Herstellerzertifikate auszustellen. Dabei sind die erste Zertifizierungsstelle CA1 sowie eine zweite Zertifizierungsstelle CA2 üblicherweise nicht gleichzeitig im System 1 vorhanden. Die zweite Zertifizierungsstelle CA2 ist üblicherweise nur dann im Herstellernetz 3 vorhanden, wenn die erste Zertifizierungsstelle CA1 beispielsweise auf Grund einer erkannten Kompromittierung außer Betrieb genommen wird. Des Weiteren umfasst das Herstellernetz 3 eine vertrauenswürdige Datenbank DB, beispielsweise eine Datenbank DB im Produktionssystem des Herstellers, wie bereits beschrieben. Auch eine der ersten Zertifizierungsstelle CA1 zugeordnete Datenbank, die von einer Kompromittierung der ersten Zertifizierungsstelle CA1 nicht betroffen wurde, kann als eine vertrauenswürdige Datenbank DB verwendet werden. Das Herstellernetz 3 ist bevorzugt vom Anlagennetz 2 getrennt oder lediglich zeitlich begrenzt beispielsweise zum Ersetzen von Herstellerzertifikaten während einer Zertifikat-Aktualisierung mit dem Anlagennetz 2 und somit den Geräten D1, D2 verbunden.

Ein Ersetzen eines nicht mehr vertrauenswürdigen ersten Herstellerzertifikats durch ein zweites Herstellerzertifikats, das von der zweiten Zertifizierungsstelle ausgestellt wird, wird anhand des in Figur 2 dargestellten Ablaufdiagramms näher ausgeführt.

Im Ausgangszustand 10 liegt eine Anforderung zum Austausch von ersten Herstellerzertifikaten vor, die bereits in einem Gerät eingebracht sind und durch ein neues zweites Herstellerzertifikat ersetzt werden sollen. Sollen beispielsweise alle ersten Zertifikate einer kompromittierten ersten Zertifizierungsstelle CA1 ersetzt werden, so werden im Verfahrensschritt 11 aus der Datenbank DB Informationen ermittelt, welche Geräte erste Herstellerzertifikate von der ersten Zertifizierungsstelle CA1 erhalten haben. Diese Information umfasst mindestens einen spezifischen Geräte-bezogenen Parameter, der im ersten Herstellerzertifikat enthalten ist und das Gerät eindeutig identifiziert. Dies ist bevorzugt die Seriennummer des Geräts, die im Feld "subject" im Zertifikat angegeben ist. Des Weiteren wird aus der Datenbank DB der erste öffentliche Schlüssel des Geräts ermittelt, welcher entweder im zweiten Herstellerzertifikat enthalten sein oder zur Verschlüsselung des zweiten privaten Schlüssels verwendet wird.

Des Weiteren kann aus der Datenbank DB ermittelt werden, zu welchem Zeitpunkt das erste Zertifikat erstellt wurde oder zu welchem Zeitpunkt das Gerät D1, D2 das erste Zertifikat erhalten hat und weitere Geräte-bezogenen Informationen, wie beispielsweise den Gerätetyp, und weitere. Diese Informationen können auch als Geräte-bezogene Parameter im ersten Zertifikat enthalten sein. Diese Informationen bzw. Geräte- oder Zertifikat-bezogenen Parameter des ersten Zertifikats werden an eine zweite Zertifizierungsstelle CA2 übermittelt oder direkt von der zweite Zertifizierungsstelle CA2 aus der Datenbank DB ausgelesen.

Die zweite Zertifizierungsstelle CA2 erzeugt im Verfahrensschritt 12 ein neues zweites Herstellerzertifikat für jedes dieser Geräte. Dabei können weitere Parameter, die im ersten Herstellerzertifikat enthalten waren, in das zweite Herstellerzertifikat übernommen werden. Solche weiteren Parameter sind beispielsweise der öffentliche Schlüssel des Geräts oder auch Zertifikatserweiterungen, die in einem digitalen Zertifikat beispielsweise nach dem ITU Standard X.509, als "public key" bzw. "extensions" bezeichnet werden. Lediglich als Herausgeber des Zertifikats, auch als "issuer" bezeichnet, wird der entsprechende Wert der zweiten Zertifizierungsstelle CA2 eingesetzt. Bevorzugt werden weitere Zertifikat-bezogene Parameter wie eine Gültigkeit und eine Seriennummer des Zertifikats, in Zertifikat als "Validity" und "serial number" neu im zweiten Herstellerzertifikat erzeugt. Anschließend wird das zweite Herstellerzertifikat mit dem privaten Schlüssel der zweiten Zertifizierungsstelle CA 2 signiert.

Der Transport der zweiten Zertifikate und gegebenenfalls der verschlüsselten zweiten privaten Schlüssel zu den Geräten kann auf vielerlei Weise erfolgen, beispielsweise per Email oder physikalischem Datenträger oder über ein Web-Portal des Herstellers zu einem Service Techniker, der die Zertifikate dann lokal oder über beispielsweise das Anlagenetz 2 in die Geräte D1, D2 einspielt oder zum Runterladen durch die Geräte D1, D2 auf einem Speicher, nicht in Figur 1 dargestellt, im Anlagennetz 2 bereitstellt.

Diese zweiten Herstellerzertifikate werden anschließend im Verfahrensschritt 13 in die zweiten Geräte D1, D2 eingebracht. Dies kann beispielsweise im Rahmen üblicher Wartungsprozesse wie einer Konfigurationsaktualisierung oder einem Aktualisieren von operativen Zertifikaten der Geräte D1, D2 erfolgen.

Wird eine mehrstufige PKI-Hierarchie verwendet, signiert also eine vertrauenswürdige Zertifizierungsstelle das Zertifikat der Zertifizierungsstelle CA1 und die Zertifizierungsstelle CA1 signiert das Herstellerzertifikat des Geräts. Werden die Vertrauenswürdigkeit der ersten und der zweiten Zertifizierungsstelle CA1, CA2 von der gleichen vertrauenswürdigen Root-Zertifizierungsstelle bestätigt, wird zusätzlich lediglich das Zertifikat der zweiten Zertifizierungsstelle den Geräten bereitgestellt.

Wird auch die vertrauenswürdige Root-Zertifizierungsstelle kompromittiert - was seltener passieren wird, da diese besser geschützt werden kann -, muss ein Zertifikatsaustausch des Root-Zertifikats über weitere Prozesse abgesichert werden. Alternativ kann im Gerät D1, D2 bereits vorher, beispielsweise bei der Fertigung, ein zweites Root-Zertifikat von einer weiteren vertrauenswürdigen Zertifizierungsstelle eingebracht werden.

Der private Schlüssel des zweiten Root-Zertifikat wird entweder besonders abgesichert nur für diesen Notfall an einem anderen Ort verwahrt, oder für anderen Aufgaben, beispielsweise zur Erstellung von Zertifikaten für Software-oder Firmware-Signaturen, verwendet.

Es ist nicht notwendig, die Geräte D1, D2 zurück in die Fertigung zu bringen, dort ein neues Schlüsselpaar für jedes Gerät zu erzeugen und den öffentlichen Schlüssel in einem Zertifikat zu signieren, da die Beziehung zwischen dem öffentlichen Schlüssel und anderen Geräte-bezogenen Parametern, insbesondere der Geräteseriennummer, im zweiten Herstellerzertifikat gleich denen im ersten Herstellerzertifikat erhalten geblieben sind.

In einer anderen vorteilhaften Ausgestaltung ist es möglich, Geräte D1, D2 mit neuen, zweiten Herstellerzertifikaten zu versorgen, ohne dass die erste Zertifizierungsstelle CA1 kompromittiert wurde. Dies kann beispielsweise sinnvoll sein, wenn die Geräte D1, D2 mit Herstellerzertifikaten mit anderer Laufzeit, anderen Algorithmen oder anderen Parametern, beispielsweise bei einem Fehler im ersten Zertifikat, Änderung des Herstellernamens, Änderung von Daten aus juristischen Gründen, ersetzt werden sollen.

In einer vorteilhaften Ausgestaltung ist es auch möglich, für die Geräte D1, D2, deren öffentlichen Schlüssel man trotz Kompromittierung der ersten Zertifizierungsstelle CA1 noch vertraut, da man sie aus einer vertrauenswürdigen Datenbank auslesen kann, nicht nur neue Herstellerzertifikate, sondern auch neue, zweite Schlüsselpaare, bestehend aus einem zweiten privaten und einem zweiten öffentlichen Schlüssel, zu erzeugen und zu verteilen. Dabei wird für ein Gerät D1, D2 ein zweites Herstellerzertifikat erzeugt, das statt dem ersten öffentlichen Schlüssel den zweiten öffentlichen Schlüssel als Parameter enthält. Die weiteren ersten Parameter werden als zweite Parameter, soweit gewünscht, in das zweite Herstellerzertifikat übernommen. Das zweite Herstellerzertifikat wird, wie bereits beschrieben, von der ausstellenden Zertifizierungsstelle signiert.

Der zweite private Schlüssel der Geräte D1, D2 wird beispielsweise in Form einer Public Key Cryptography Standard PKCS#12-Datei übermittelt.

Der zweite private Schlüssel wird mit dem ersten öffentlichen Schlüssel des Geräts verschlüsselt und somit kryptographisch geschützt. Damit kann lediglich das Gerät, das im Besitz des ersten privaten Schlüssels ist, den zweiten privaten Schlüssel entschlüsseln und verwenden.

Durch die vertrauenswürdige Datenbank DB kann der Hersteller der Geräte D1, D2 ermitteln, welchen ersten Herstellerzertifikaten er trotz Kompromittierung der ersten Zertifizierungsstelle noch vertrauen kann, und die betreffenden Geräte somit sicher auch mit neuem Schlüsselmaterial versorgen.

Somit können Informationen aus einer vorhandenen vertrauenswürdigen Datenbank DB beim Hersteller genutzt werden, um neue Herstellerzertifikate zu erstellen, ohne dass die betroffenen Geräte D1, D2 für ein erneutes Zertifikat-Imprinting im Feld ausgebaut und zum Hersteller zurückgebracht werden müssen. Dies ist nur möglich, weil der Hersteller diese Datenbank DB kennt und damit weiß, welchen ersten Zertifikaten einer kompromittierten ersten Zertifizierungsstelle CA1 er dennoch vertrauen kann. Dritte, die nicht auf diese Datenbank DB zugreifen können, können damit auch nicht unterscheiden, ob ein Herstellerzertifikat wirklich vor dem Zeitpunkt von der ersten Zertifizierungsstelle CA1 erstellt wurde oder ob ein Angreifer es später unbefugt erstellt und rückdatiert hat.

Somit können für alle Geräte, deren öffentliche Schlüssel zusammen mit den das Gerät identifizierenden Daten, z.B. Seriennummer des Geräts, sicher bekannt sind, neue Herstellerzertifikate von einer zweiten Zertifizierungsstelle CA2 erstellt werden. Die Geräte können für die Ersetzung der Herstellerzertifikate im Feld verbleiben. Das Schlüsselpaar im Gerät kann dabei wahlweise entweder weiter verwendet oder auch sicher ersetzt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt. Das Verfahren ist nicht nur für Herstellerzertifikate auf Geräten anwendbar, sondern prinzipiell auch für alle anderen Zertifikate, sofern eine geeignete, nicht kompromittierte, Datenbank vorhanden ist. Allerdings ist es für Herstellerzertifikate besonders vorteilhaft, da hier ein Ersatz von ausgerollten Zertifikaten nicht vorgesehen und daher besonders schwierig ist.

## Patentansprüche

1. Verfahren zum sicheren Ersetzen eines ersten, bereits in ein Gerät (D1, D2) eingebrachten Herstellerzertifikats durch ein zweites Herstellerzertifikat, mit den Schritten:
- Ermitteln (11) von mindestens einem das Gerät (D1, D2) eindeutig kennzeichnenden, spezifischen Geräte-bezogenen Parameter, der im ersten Herstellerzertifikat enthalten ist und das Gerät (D1, D2) eindeutig identifiziert, aus einer vertrauenswürdigen Gerätedatenbank (DB),
- Erzeugen (12) eines zweiten Herstellerzertifikats enthaltend mindestens den eindeutig kennzeichnenden Geräte-bezogenen Parameter des ersten Zertifikats und einen öffentlichen Schlüssel des Gerätes (D1, D2), und
- Ersetzen (13) des ersten Herstellerzertifikates durch das zweite Herstellerzertifikat im Gerät (D1, D2),
wobei über die Gerätedatenbank (DB) ermittelt wird, für welche Geräte ein erstes Herstellerzertifikat von einer kompromittierten ersten Zertifizierungsstelle (CA1) ausgestellt wurde und in den ermittelten Geräten (D1, D2) das erste Herstellerzertifikat durch ein zweites Herstellerzertifikat, das von einer zweiten Zertifizierungsstelle (CA2) erzeugt wird, ersetzt wird.

2. Verfahren nach dem vorhergehenden Anspruch, wobei der spezifische Geräte-bezogene Parameter eine eindeutige Seriennummer des Geräts (D1, D2) ist.

3. Verfahren nach einem der vorhergehenden Ansprüche, wobei das zweite Herstellerzertifikat bei einem Wartungsvorgang, insbesondere bei einer Konfigurationsänderung des Geräts (D1, D2), oder bei einem Aktualisieren eines operativen Zertifikats in das Gerät (D1, D2) eingebracht wird.

4. Verfahren nach einem der vorhergehenden Ansprüche, wobei mindestens ein Zertifikat-bezogener Parameter, insbesondere die Zertifikatsseriennummer des zweiten Herstellerzertifikats und/oder die Gültigkeitsdauer des zweiten Herstellerzertifikats, unabhängig von den entsprechenden Parametern des ersten Zertifikats erzeugt werden.

5. Verfahren nach einem der vorhergehenden Ansprüche, wobei mindestens ein weiterer Geräte-bezogener Parameter des ersten Zertifikates aus der Gerätedatenbank (DB) ermittelt wird und als Parameter in das zweite Herstellerzertifikat übernommen wird.

6. Verfahren nach einem der vorhergehenden Ansprüche, wobei von einer zweiten Zertifizierungsstelle (CA2) das zweite Herstellerzertifikat erzeugt und mit dem privaten Schlüssel der zweiten Zertifizierungsstelle (CA2) signiert wird und das zweite Herstellerzertifikat mit einem Zertifikat der zweiten Zertifizierungsstelle (CA2) an das Gerät (D1, D2) übermittelt wird und
vom Gerät (D1, D2) das zweite Herstellerzertifikat als neues Herstellerzertifikat übernommen wird.

7. Verfahren nach einem der vorhergehenden Ansprüche, wobei von der ersten Zertifizierungsstelle (CA1) das zweite Herstellerzertifikat erzeugt und mit dem privaten Schlüssel der ersten Zertifizierungsstelle (CA1) signiert wird und das zweite Herstellerzertifikat im Gerät (D1, D2) als neues Herstellerzertifikat übernommen wird.

8. Verfahren nach einem der vorhergehenden Ansprüche, wobei ein öffentlicher Schlüssel des Geräts (D1, D2) im ersten Herstellerzertifikat als öffentlicher Schlüssel in das zweite Herstellerzertifikat übernommen wird.

9. Verfahren nach einem der Ansprüche 1 bis 6, wobei in ein zweites Herstellerzertifikat ein vom öffentlichen Schlüssel des ersten Herstellerzertifikats unterschiedlicher zweiter öffentlicher Schlüssel eingebracht wird und ein zum zweiten öffentlichen Schlüssel gehörender zweiter privater Schlüssel kryptographisch mit dem ersten öffentlichen Schlüssel geschützt an das Gerät (D1, D2) bereitgestellt wird.

10. System mit einer auf eine Public Key Infrastruktur basierenden Sicherheitsfunktion, umfassend mindestens eine vertrauenswürdige Gerätedatenbank (DB), mindestens eine Zertifizierungsstelle (CA1, CA2) und mindestens einem Gerät (D1, D2), die derart ausgebildet sind, das Verfahren gemäß einem der Ansprüche 1 bis 9 durchzuführen.

11. System nach Anspruch 10, das als Bestandteil einer Industrieanlage ausgebildet ist.

12. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 9 durchzuführen.

## Claims

1. Method for securely replacing a first manufacturer certificate, already introduced into a device (D1, D2), with a second manufacturer certificate, having the steps of:
- ascertaining (11) at least one specific device-related parameter that explicitly characterizes the device (D1, D2), which is contained in the first manufacturer certificate, and uniquely identifies the device (D1, D2), from a trusted device database (DB),
- generating (12) a second manufacturer certificate containing at least the explicitly characterizing device-related parameter of the first certificate and a public key of the device (D1, D2), and
- replacing (13) the first manufacturer certificate with the second manufacturer certificate in the device (D1, D2),
wherein the device database (DB) is used to ascertain those devices to which a first manufacturer certificate has been issued by a compromised first certification authority (CA1) and the first manufacturer certificate is replaced in the ascertained devices (D1, D2) with a second manufacturer certificate generated by a second certification authority (CA2).

2. Method according to the preceding claim, wherein the specific device-related parameter is a unique serial number of the device (D1, D2).

3. Method according to either of the preceding claims, wherein the second manufacturer certificate is introduced into the device (D1, D2) during a maintenance operation, in particular during a change of configuration of the device (D1, D2), or while an operative certificate is being updated.

4. Method according to one of the preceding claims, wherein at least one certificate-related parameter, in particular the certificate serial number of the second manufacturer certificate and/or the validity period of the second manufacturer certificate, is generated independently of the corresponding parameters of the first certificate.

5. Method according to one of the preceding claims, wherein at least one further device-related parameter of the first certificate is ascertained from the device database (DB) and is transferred to the second manufacturer certificate as a parameter.

6. Method according to one of the preceding claims, wherein a second certification authority (CA2) generates the second manufacturer certificate and signs it using the private key of the second certification authority (CA2), and the second manufacturer certificate is transmitted with a certificate of the second certification authority (CA2) to the device (D1, D2), and
the device (D1, D2) accepts the second manufacturer certificate as a new manufacturer certificate.

7. Method according to one of the preceding claims, wherein the first certification authority (CA1) generates the second manufacturer certificate and signs it using the private key of the first certification authority (CA1), and the second manufacturer certificate is accepted in the device (D1, D2) as a new manufacturer certificate.

8. Method according to one of the preceding claims, wherein a public key of the device (D1, D2) in the first manufacturer certificate is transferred to the second manufacturer certificate as a public key.

9. Method according to one of Claims 1 to 6, wherein a second public key different from the public key of the first manufacturer certificate is introduced into a second manufacturer certificate, and a second private key associated with the second public key is delivered to the device (D1, D2) in a manner cryptographically protected by the first public key.

10. System having a security function based on a public key infrastructure, comprising at least one trusted device database (DB), at least one certification authority (CA1, CA2) and at least one device (D1, D2), which are configured to perform the method according to one of Claims 1 to 9.

11. System according to Claim 10, which is in the form of part of an industrial installation.

12. Computer program product directly loadable into a memory of a digital computer, comprising program code parts suitable for performing the steps of the method according to one of Claims 1 to 9.

## Revendications

1. Procédé de remplacement sécurisé d'un premier certificat de fabricant déjà incorporé dans un appareil (D1, D2) par un deuxième certificat de fabricant, comprenant les étapes consistant à
- déterminer (11) à partir d'une base de données d'appareils (DB) fiable au moins un paramètre spécifique à l'appareil (D1,D2) qui est contenu dans le premier certificat de fabricant et identifie de manière univoque l'appareil (D1,D2).
- générer (12) un deuxième certificat de fabricant contenant au moins le paramètre du premier certificat se rapportant à l'appareil et le caractérisant de manière univoque et une clé publique de l'appareil (D1, D2), et
- remplacer (13) le premier certificat de fabricant par le deuxième certificat de fabricant dans l'appareil (D1, D2),
dans lequel on détermine, par l'intermédiaire de la base de données d'appareils (DB), pour quels appareils un premier certificat de fabricant a été délivré par une première autorité de certification (CA1) compromise et, dans les appareils déterminés (D1, D2), le premier certificat de fabricant est remplacé par un deuxième certificat de fabricant qui est généré par une deuxième autorité de certification (CA2).

2. Procédé selon la revendication précédente, dans lequel le paramètre spécifique lié au dispositif est un numéro de série unique de l'appareil (D1, D2).

3. Procédé selon l'une des revendications précédentes, dans lequel le deuxième certificat de fabricant est introduit dans l'appareil (D1, D2) lors d'une opération de maintenance, notamment lors d'une modification de configuration de l'appareil (D1, D2), ou lors d'une mise à jour d'un certificat opérationnel.

4. Procédé selon l'une des revendications précédentes, dans lequel au moins un paramètre relatif au certificat, en particulier le numéro de série du certificat du deuxième fabricant et/ou la durée de validité du deuxième certificat du fabricant, est généré indépendamment des paramètres correspondants du premier certificat.

5. Procédé selon l'une des revendications précédentes, dans lequel au moins un autre paramètre relatif à l'appareil du premier certificat est déterminé à partir de la base de données d'appareils (DB) et est repris comme paramètre dans le deuxième certificat de fabricant.

6. Procédé selon l'une des revendications précédentes, dans lequel le deuxième certificat de fabricant est généré par une deuxième autorité de certification (CA2) et signé avec la clé privée de la deuxième autorité de certification (CA2) et le deuxième certificat de fabricant est transmis à l'appareil (D1, D2) avec un certificat de la deuxième autorité de certification (CA2) et de l'appareil (D1, D2), le deuxième certificat de fabricant est repris comme nouveau certificat de fabricant.

7. Procédé selon l'une des revendications précédentes, dans lequel le deuxième certificat de fabricant est généré par la première autorité de certification (CA1) et signé avec la clé privée de la première autorité de certification (CA1) et le deuxième certificat de fabricant est repris dans l'appareil (D1, D2) comme nouveau certificat de fabricant.

8. Procédé selon l'une des revendications précédentes, dans lequel une clé publique de l'appareil (D1, D2) dans le premier certificat de fabricant est reprise comme clé publique dans le deuxième certificat de fabricant.

9. Procédé selon l'une des revendications 1 à 6, dans lequel une deuxième clé publique, différente de la clé publique du premier certificat de fabricant, est introduite dans un deuxième certificat de fabricant et une deuxième clé privée appartenant à la deuxième clé publique est mise à disposition de l'appareil (D1,D2), protégée cryptographiquement avec la première clé publique.

10. Système ayant une fonction de sécurité basée sur une infrastructure à clé publique, comprenant au moins une base de données d'appareils de confiance (DB), au moins une autorité de certification (CA1, CA2) et au moins un appareil (Dl, D2) configurés pour mettre en oeuvre le procédé selon l'une quelconque des revendications 1 à 9.

11. Système selon la revendication 10, qui est conçu comme partie intégrante d'une installation industrielle.

12. Produit de programme informatique pouvant être chargé directement dans une mémoire d'un ordinateur numérique, comprenant des parties de code de programme aptes à exécuter les étapes du procédé selon l'une quelconque des revendications 1 à 9.
